# EUROPÄISCHE PATENTANMELDUNG

(11) **EP 1 482 337 A1**
(43) Veröffentlichungstag der Anmeldung: **01.12.2004**
(21) Anmeldenummer: 03012348.3
(22) Anmeldetag: 30.05.2003
(51) Int. Cl.: G02B 6/38

(54) **Lichtleitersteckeranordnung und Herstellungsverfahren dafür**

(71) Anmelder: TRUMPF Laser GmbH + Co. KG, 78713 Schramberg (DE)
(72) Erfinder: Bonna, Ulrich, 78647 Trossingen (DE); Armbruster, Bernd, 78733 Aichhalden (DE); Fuchs, Stefan, 78661 Böhringen (DE)
(74) Vertreter: KOHLER SCHMID + PARTNER

(57) **Zusammenfassung**

Bei einer Lichtleitersteckeranordnung (1) mit einem Lichtleiter (2), einem Stecker (3) und einer innerhalb einer zentralen Öffnung (4) des Steckers (3) angeordneten Hülse (10), in welcher der Lichtleiter (2) klemmend gehalten ist, ist der Durchmesser der Gehäuseöffnung (4) größer als der Außendurchmesser der Hülse (10) und die Hülse (10) im Stecker (3) in der Position fixiert, in welcher der Licht führende Kern des in der Hülse (10) klemmend gehaltenen Lichtleiters (2) zentriert zur Steckerachse (5) ist. Bevorzugt sind die Hülse (10) und der Stecker (3) miteinander stoffschlüssig, kraftschlüssig oder mittels eines Klebstoffs verbunden.

## Beschreibung

Die vorliegende Erfindung betrifft eine Lichtleitersteckeranordnung mit einem Lichtleiter, einem Stecker und einer innerhalb einer zentralen Öffnung des Steckers angeordneten Hülse, in welcher der Lichtleiter klemmend gehalten ist, sowie ein Verfahren zum Herstellen einer solchen Lichtleitersteckeranordnung.

Eine derartige Lichtleitersteckeranordnung ist beispielsweise durch die DE 2853649 C2 bekannt geworden.

Lichtleiter, welche zur Übertragung von hohen Laserlichtleistungen eingesetzt werden, bestehen aus einem Licht führenden Kern und mindestens einem Mantel, welcher durch entsprechende Dotierung einen niedrigeren optischen Brechungsindex als der Licht führende Kern aufweist, so dass an der Grenzfläche Kern/Mantel bis zu bestimmten Winkeln Totalreflexion auftritt. In der Lichtleiterherstellung kann entweder der Kerndurchmesser in engeren Toleranzen und der Manteldurchmesser in grösseren Toleranzen gefertigt werden, oder umgekehrt. Die Strahlqualität des im Lichtleiter geführten Lichts ist dabei umso besser, je enger die Toleranz des Licht führenden Kerndurchmessers ist.

Aus der DE 2853649 C2 sind zwei Stecker zur Kopplung zweier Lichtleiter bekannt. Jeder Stecker hat eine axial federnd gelagerte Hülse mit drei in einer Ebene angeordneten Kugeln, zwischen denen der Lichtleiter klemmend gehalten ist. Die Kugeln dienen gleichzeitig zur Zentrierung des Lichtleiters. Wesentlich ist dabei, dass der Manteldurchmesser genau definiert zu den drei Kugeln steht. Werden nun die beiden Stecker miteinander verbunden, so richten sich diese durch die Kugeln aufeinander aus, und die Manteldurchmesser beider Lichtleiter werden entsprechend konzentrisch zueinander ausgerichtet. Allerdings treten bei Lichtleitern fertigungsbedingt Exzentrizitäten zwischen Kern und Mantel auf, so dass bei dieser bekannten Lichtleitersteckeranordnung die Licht führenden Kerne entsprechend exzentrisch zueinander stehen können. Dies hat zur Folge, dass ein hoher Anteil der Lichtleistung nicht in den anderen Lichtleiter eingekoppelt, sondern im Stecker absorbiert und in Verlustwärme umgesetzt wird.

Bei Festkörperlasern, wie z.B. bei Nd:YAG-Lasern, geht die Tendenz zu immer höheren Laserleistungen bei gleichzeitig besser werdender Strahlqualität. Damit diese Strahlqualität auch am zu bearbeitenden Werkstück erreicht wird, muss der Licht führende Kern des Laserlichtleiters in seinem Querschnitt immer kleiner werden. Um hier ein möglichst verlustfreies Plug & Play der Lichtleitkabel am Laser oder an der Bearbeitungseinheit zu gewährleisten, ist eine sehr genaue Positionierung des Laserlichtleiterkerns in radialer Richtung innerhalb des Verbindungssteckers erforderlich.

Aufgabe der vorliegenden Erfindung ist es daher, eine Lichtleitersteckeranordnung der eingangs genannten Art dahingehend weiterzubilden, dass der Licht führende Kern des Lichtleiters im Stecker möglichst exakt in radialer Richtung ausgerichtet ist, sowie ein Herstellungsverfahren dafür anzugeben.

Diese Aufgabe wird erfindungsgemäß bezüglich des Verfahrens dadurch gelöst, dass die Hülse samt dem darin klemmend gehaltenen Lichtleiter innerhalb der Öffnung des Steckers radial verschoben wird, bis der Licht führende Kern des Lichtleiters zentriert zur Steckerachse ausgerichtet ist, und dann die Hülse in dieser Position im Stecker fixiert wird. Die Ausrichtung der Hülse erfolgt insbesondere zu einer Steckfläche des Steckers, z.B. zu einem Steckkonus.

Die oben genannte Aufgabe wird bei der eingangs genannten Lichtleitersteckeranordnung erfindungsgemäß dadurch gelöst, dass der Durchmesser der Öffnung größer als der Außendurchmesser der Hülse ist und dass die Hülse im Stecker in der Position, in welcher der Licht führende Kern des in der Hülse klemmend gehaltenen Lichtleiters zentriert zur Steckerachse ist, fixiert ist.

Bei bevorzugten Ausführungsformen der Lichtleitersteckeranordnung sind die Hülse und der Stecker miteinander stoffschlüssig, kraftschlüssig oder mittels eines Klebstoffs verbunden.

Die einmal fixierte Position des Lichtleiters im Stecker muss möglichst stabil über den ganzen Arbeitstemperaturbereich stehen, ohne dass bei Temperaturveränderung ein Spiel in der Lichtleiterhalterung oder Deformationskräfte am Lichtleiter auftreten. Auch müssen bei Temperaturveränderung Durchmesseränderungen und axiale Längenänderungen des Lichtleiters oder des Steckers möglich sein, ohne dass sich Spiel in der Lichtleiterhalterung einstellt oder auf den Lichtleiter äußere Kräfte wirken, welche im Lichtleiter zu Spannungen und Deformationen führen. Da bei der Erfindung die Toleranz des Manteldurchmessers keinerlei Auswirkungen auf die Lichtleiterzentrierung hat, kann der Lichtleiter mit sehr eng toleriertem Kerndurchmesser hergestellt werden, was sich äußerst positiv auf die Strahlqualität des Lasersystems auswirkt.

Vorzugsweise weist die Hülse eine radial nach innen vorgespannte Dreipunkthalterung auf, in welcher der Lichtleiter klemmend gehalten ist. Diese statisch definierte Dreipunkthalterung ermöglicht eine spielfreie und temperaturkompensierte Lagerung des Lichtleiters innerhalb der Hülse.

Bei einer ganz besonders bevorzugten Ausführungsform der erfindungsgemäßen Lichtleitersteckeranordnung weist die Dreipunkthalterung drei in einer Ebene um den Lichtleiter herum angeordnete, radial verschiebbar gelagerte Kugeln auf, die radial nach innen vorgespannt sind.

Vorzugsweise sind die Kugeln zwischen einem Konus mit einem Konuswinkel von ca. 60° bis ca. 120°, bevorzugt ca. 90°, und einem Gegenlager angeordnet, wobei der Konus und das Gegenlager relativ zueinander axial verschiebbar und durch mindestens eine Feder in Richtung aufeinander zu vorgespannt sind. Die zwischen Konus und Gegenlager wirkende Federkraft wird durch den Konus in eine radial gerichtete Kraftkomponente aufgeteilt, mit der die Kugeln gegen den Mantel des Lichtleiters drücken und diesen spielfrei halten. Die Andrückkraft ist durch den Konuswinkel und die Federkraft definierbar. Außerdem ermöglichen die Kugeln axiale Längenänderungen zwischen Lichtleiter und Hülse infolge unterschiedlicher Längenausdehnungskoeffizienten der verschiedenen Bauteile, ohne dass Spannungen auf den Lichtleiter wirken.

In einer vorteilhaften Weiterbildung dieser Ausführungsform ist die Feder an einem axial verstellbaren Federgegenlager, z.B. an einem Gewindering, abgestützt, um die Federkraft und damit die auf die Kugeln wirkende Vorspannung einstellen zu können.

Bei einer anderen bevorzugten Ausführungsform der erfindungsgemäßen Lichtleitersteckeranordnung weist die Dreipunkthalterung drei sich kreuzende runde Stifte auf, die eine dreieckige, vorzugsweise gleichschenklige, Klemmöffnung bilden. In der Klemmöffnung ist der Lichtleiter durch die Vorspannung der tangential anliegenden Stifte spielfrei gehalten, wobei axiale Längenänderungen zwischen Lichtleiter und Hülse infolge unterschiedlicher Längenausdehnungskoeffizienten der verschiedenen Bauteile ohne zusätzlich auf den Lichtleiter wirkende Spannungen möglich bleiben.

Die auf den Lichtleiter wirkende Vorspannung ist durch die elastische Auslenkung der Stifte infolge des in die Klemmöffnung eingeführten Lichtleiters gegeben. Die Stifte können in der Hülse feststehend angeordnet sein, wobei die Klemmöffnung ohne Lichtleiter kleiner als der Manteldurchmesser ist. Bei verstellbar gelagerten Stiften kann die Vorspannung von außen durch entsprechende Auslenkung der Stifte eingestellt werden. Dazu kann beispielsweise das eine Ende eines Stiftes im Lichtleiterhalter fixiert und das andere Ende auslenkbar gelagert sein. Es ist auch möglich, einen oder alle Stifte mittels einer Drehfeder mit definiertem Drehmoment vorzuspannen, so dass die Drehfeder dauerhaft eine definierte Vorspannkraft auf die Stifte ausübt, die so den Lichtleiter spielfrei halten.

Bevorzugt sind die Kugeln und die Stifte entweder aus Quarzglas, welches einen hohen Transmissionsgrad für Laserlicht der entsprechenden Wellenlänge eines Festkörperlasers hat, oder aus Keramik, welche eine hohe Temperaturverträglichkeit aufweist. Alternativ können auch Kugeln aus einem metallischen Werkstoff verwendet werden, die poliert oder mit einer hochreflektierenden Beschichtung, beispielsweise aus Gold, versehen sind und daher die Laserstrahlung hauptsächlich reflektieren. So kann ein schädlicher Einfluss der Laserstrahlung auf die Lichtleiterhalterung aufgrund von Streustrahlung und Strahlung, welche während des Justiervorgangs oder bei nicht exakt radialer Ausrichtung nicht in den Lichtleiter eingekoppelt wird, vermieden werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen Längsschnitt der erfindungsgemäßen Lichtleitersteckeranordnung mit einem in einer Hülse spielfrei gehaltenen Lichtleiter;
- Fig. 2: eine vergrößerte Ansicht der in Fig. 1 gezeigten Hülse;
- Fig. 3: eine Querschnittansicht der Hülse gemäß III-III in Fig. 2;
- Fig. 4: eine andere Ausführungsform der in Fig. 2 gezeigten Hülse;
- Fig. 5: eine perspektivischen Ansicht einer anders ausgebildeten Hülse der erfindungsgemäßen Lichtleitersteckeranordnung; und
- Fig. 6: die Frontansicht der in Fig. 4 gezeigten Hülse.

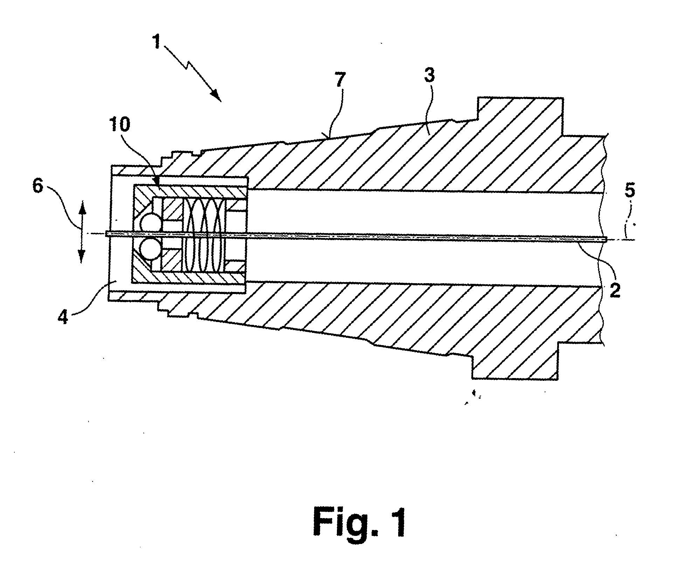

Die in **Fig. 1** gezeigte Lichtleitersteckeranordnung **1** umfasst eine Hülse **10**, in welcher der Mantel eines Lichtleiters **2** klemmend gehalten ist, und einen Stecker **3** mit einer zentralen Öffnung **4**, in der die Hülse 10 befestigt ist. Der Durchmesser der Öffnung 4 ist größer als der Außendurchmesser der Hülse 10, die in der Öffnung 4 in der Position, in welcher der Licht führende Kern des in der Hülse 10 klemmend gehaltenen Lichtleiters 2 zentriert zur Steckerachse **5** ist, fixiert ist. Das Ausrichten der Hülse 10 im Stecker 3 erfolgt mittels einer Justiereinrichtung, die die Hülse 10 greift und dann in der Öffnung 4 radial (Doppelpfeil **6**) verschiebt, bis der lichtführende Kern des klemmend gehaltenen Lichtleiters 2 koaxial zur Steckerachse 5 bzw. konzentrisch zu seiner konischen Steckfläche **7** justiert ist. Wenn diese Position erreicht ist, wird die Hülse 10 mit dem Stecker 3 fest verbunden (verschweißt, verlötet, verklebt, verspannt, ...).

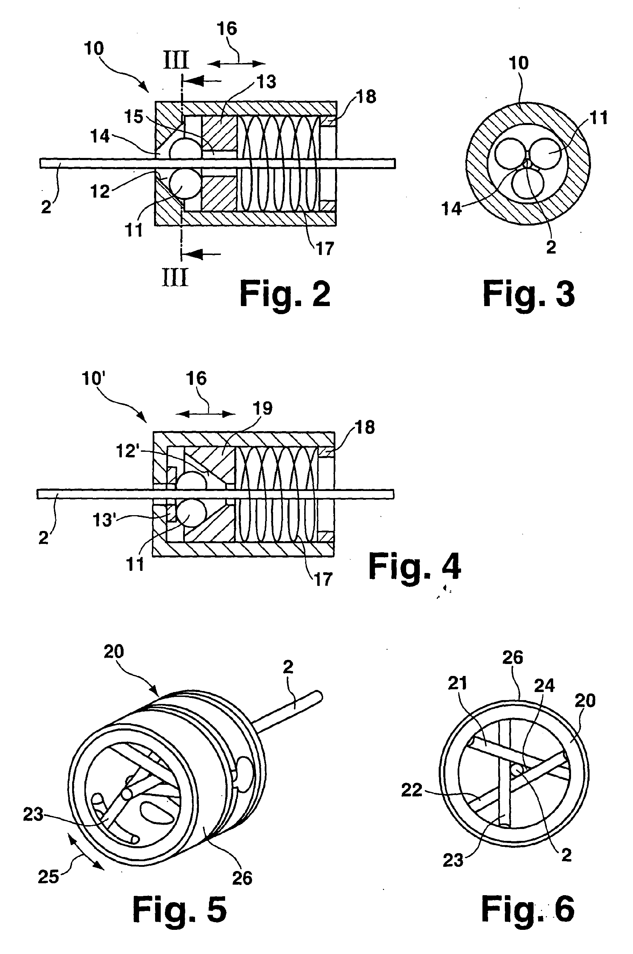

Wie in **Fign. 2 und 3** gezeigt, ist der Lichtleiter 2 in der Hülse 10 durch drei, in einer Ebene jeweils um 120° versetzt angeordnete Kugeln **11** aus Quarzglas gehalten, die zwischen einem in der Hülse 10 vorgesehenen Konus **12** und einem Gegenlager **13** angeordnet sind. Der Konus 12 und das Gegenlager 13 weisen jeweils eine zentrale Öffnung **14, 15** für den Lichtleiter 2 auf. Das als Druckscheibe ausgebildete Gegenlager 13 ist in der Hülse 10 axial verschiebbar gelagert (Doppelpfeil **16**) und durch eine axial wirkende Druckfeder **17** in Richtung auf den Konus 12 vorgespannt. Die Druckfeder 17 ist in der Hülse 10 an einem Federgegenlager **18** abgestützt, das zur Einstellung der auf das Gegenlager 13 wirkenden Federkraft axial verstellbar ist. Die Kugeln 11 werden von der Druckfeder 17 über das Gegenlager 13 an den Konus 12 gedrückt, wo die axial wirkende Kraft auch in eine radial auf die Kugeln 11 wirkende Kraftkomponente aufgeteilt wird, mit der die Kugeln 11 auf den Laserlichtleiter 2 drücken und diesen spielfrei halten. Diese auf den Lichtleiter 2 wirkende Andrückkraft wird durch den Konuswinkel, der im Ausführungsbeispiel 90° beträgt, und die Federkraft der Druckfeder 17 definiert. Die Kugeln 11 ermöglichen bei Temperaturänderungen sowohl eine radiale Ausdehnung des Lichtleiters 2 gegen die Kraft der Druckfeder 17 als auch eine axiale Längenänderung zwischen Lichtleiter 2 und Hülse 10 infolge unterschiedlicher Längenausdehnungskoeffizienten der verschiedenen Bauteile.

Gegenüber der Hülse 10 unterscheidet sich die in **Fig. 4** gezeigte Hülse **10'** dadurch, dass der Konus **12'** an der axial verschiebbar (Doppelpfeil 16) gelagerten Druckscheibe **19** vorgesehen ist und das Gegenlager **13'** am Boden der Hülse 10' befestigt ist. Die von der Druckfeder 17 beaufschlagte Druckscheibe 19 drückt die Kugeln 11 gegen das Gegenlager 13' und aufgrund des Konus 12' auch gegen den Lichtleiter 2.

Die in Fign. **5** und **6** gezeigte Hülse **20** weist drei sich kreuzende runde Stifte **21, 22, 23** aus Quarzglas auf. Die unter 120° angeordneten Stifte bilden innerhalb der Hülse 20 eine dreieckige gleichschenklige Klemmöffnung **24,** in welcher der Lichtleiter 2 klemmend gehalten ist. Die beiden Stifte 21, 22 sind fest in der Hülse 20 fixiert, während der dritte Stift 23 in der Hülse 20 entlang des Doppelpfeils **25** verstellbar gelagert ist. Dazu ist das eine Ende des dritten Stiftes 23 in der Hülse 20 und das andere Ende in einem Ring **26** fixiert, der außen auf der Hülse 20 drehbar gelagert ist. Wenn der Lichtleiter 2 in die Klemmöffnung 24 eingeführt ist, wird der Ring 26 so weit verdreht, dass der dritte Stift 23 den Lichtleiter 2 so positioniert, dass dieser an allen drei Stiften in einer Ebene tangential anliegt. In dieser Position wird der Ring 26 an der Hülse 20 fixiert. Die Stifte 21, 22, 23 ermöglichen bei Temperaturänderungen sowohl eine radiale Ausdehnung des Lichtleiters 2 entweder aufgrund ihrer Elastizität oder gegen die Wirkung einer auf den dritten Stift 23 wirkenden Drehfeder (nicht gezeigt) als auch eine axiale Längenänderungen zwischen Lichtleiter 2 und Hülse 20 infolge unterschiedlicher Längenausdehnungskoeffizienten der verschiedenen Bauteile.

## Patentansprüche

1. Verfahren zum Herstellen einer Lichtleitersteckeranordnung (1), bei welcher ein Lichtleiter (2) in einer Hülse (10; 10'; 20), die innerhalb einer zentralen Öffnung (4) eines Steckers (3) angeordnet ist, klemmend gehalten ist,
**dadurch gekennzeichnet,**
**dass** die Hülse (10; 10'; 20) samt dem darin klemmend gehaltenen Lichtleiter (2) innerhalb der Öffnung (4) des Steckers (3) radial verschoben wird, bis der Licht führende Kern des Lichtleiters (2) zentriert zur Steckerachse (5) ausgerichtet ist, und dann die Hülse (10; 10'; 20) in dieser Position im Stecker (3) fixiert wird.

2. Lichtleitersteckeranordnung (1) mit einem Lichtleiter (2), einem Stecker (3) und einer innerhalb einer zentralen Öffnung (4) des Steckers (3) angeordneten Hülse (10; 10'; 20), in welcher der Lichtleiter (2) klemmend gehalten ist,
**dadurch gekennzeichnet,**
**dass** der Durchmesser der Öffnung (4) größer als der Außendurchmesser der Hülse (10; 10'; 20) ist und dass die Hülse (10; 10'; 20) im Stecker (3) in der Position, in welcher der Licht führende Kern des in der Hülse (10; 10'; 20) klemmend gehaltenen Lichtleiters (2) zentriert zur Steckerachse (5) ist, fixiert ist.

3. Lichtleitersteckeranordnung nach Anspruch 2, **dadurch gekennzeichnet, dass** die Hülse (10; 10'; 20) und der Stecker (3) miteinander stoffschlüssig, kraftschlüssig oder mittels eines Klebstoffs verbunden sind.

4. Lichtleitersteckeranordnung nach Anspruch 2 oder 3, **dadurch gekennzeichnet, dass** die Hülse (10; 10'; 20) eine radial nach innen vorgespannte Dreipunkthalterung aufweist, in welcher der Lichtleiter (2) klemmend gehalten ist.

5. Lichtleitersteckeranordnung nach Anspruch 4, **dadurch gekennzeichnet, dass** die Dreipunkthalterung drei in einer Ebene um den Lichtleiter (2) herum angeordnete, radial verschiebbar gelagerte Kugeln (11) aufweist, die radial nach innen vorgespannt sind.

6. Lichtleitersteckeranordnung nach Anspruch 5, **dadurch gekennzeichnet, dass** die Kugeln (11) zwischen einem Konus (12; 12') mit einem Konuswinkel von ca. 60° bis ca. 120°, insbesondere ca. 90°, und einem Gegenlager (13; 13') angeordnet sind, wobei der Konus (12; 12') und das Gegenlager (13; 13') relativ zueinander axial verschiebbar und in Richtung aufeinander zu vorgespannt sind.

7. Lichtleitersteckeranordnung nach Anspruch 6, **dadurch gekennzeichnet, dass** der Konus (12; 12') und das Gegenlager (13; 13') durch mindestens eine Feder (17) vorgespannt sind.

8. Lichtleitersteckeranordnung nach Anspruch 7, **dadurch gekennzeichnet, dass** die mindestens eine Feder (17) an einem axial verstellbaren Federgegenlager (18) abgestützt ist.

9. Lichtleitersteckeranordnung nach Anspruch 4, **dadurch gekennzeichnet, dass** die Dreipunkthalterung drei sich kreuzende runde Stifte (21, 22, 23) aufweist, die eine dreieckige, vorzugsweise gleichschenklige, Klemmöffnung (24) bilden.

10. Lichtleitersteckeranordnung nach Anspruch 9, **dadurch gekennzeichnet, dass** mindestens ein Stift (23) zur Änderung des Querschnitts der dreieckigen Klemmöffnung (24) verstellbar ist.

11. Lichtleitersteckeranordnung nach Anspruch 10, **dadurch gekennzeichnet, dass** das eine Ende des verstellbaren Stifts (23) in der Hülse (20) fixiert und das andere Ende auslenkbar gelagert ist.

12. Lichtleitersteckeranordnung nach einem der Ansprüche 5 bis 11, **dadurch gekennzeichnet, dass** die Kugeln (11) oder die Stifte (21, 22, 23) aus Quarzglas, aus Keramik oder aus poliertem oder mit einer reflektierenden Beschichtung, insbesondere einer Goldbeschichtung, versehenem Metall sind.

## Geänderte Patentansprüche

### Geänderte Patentansprüche gemäss Regel 86(2) EPÜ.

**1.** Lichtleiterklemmvorrichtung (1) mit einem Lichtleiter (2) und drei in einer Ebene um den Lichtleiter (2) herum angeordneten Kugeln (11), die in einer Hülse (10; 10') axial und radial verschiebbar gelagert und radial nach innen vorgespannt sind,
**dadurch gekennzeichnet,**
**dass** die Kugeln (11) zwischen einem Konus (12; 12') mit einem Konuswinkel von ca. 60° bis ca. 120°, insbesondere ca. 90°, und einem Gegenlager (13; 13') angeordnet sind, wobei der Konus (12; 12') und das Gegenlager (13; 13') relativ zueinander axial verschiebbar und in Richtung aufeinander zu vorgespannt sind.

**2.** Lichtleiterklemmvorrichtung nach Anspruch 1, **dadurch gekennzeichnet, dass** der Konus (12; 12') und das Gegenlager (13; 13') durch mindestens eine Feder (17) vorgespannt sind.

**3.** Lichtleiterklemmvorrichtung nach Anspruch 2, **dadurch gekennzeichnet, dass** die mindestens eine Feder (17) an einem axial verstellbaren Federgegenlager (18) abgestützt ist.

**4.** Lichtleiterklemmvorrichtung nach einem der vorhergehenden Ansprüche, **dadurch gekennzeichnet, dass** die Kugeln (11) aus Quarzglas, aus Keramik oder aus poliertem oder mit einer reflektierenden Beschichtung, insbesondere einer Goldbeschichtung, versehenem Metall sind.

**5.** Lichtleiterklemmvorrichtung nach einem der vorhergehenden Ansprüche, **dadurch gekennzeichnet, dass** die Hülse (10; 10') innerhalb einer zentralen Öffnung (4) eines Steckers (3) angeordnet ist und dass der Durchmesser der Öffnung (4) größer als der Außendurchmesser der Hülse (10; 10') ist und dass die Hülse (10; 10') im Stecker (3) in der Position, in welcher der Licht führende Kern des in der Hülse (10; 10') klemmend gehaltenen Lichtleiters (2) zentriert zur Steckerachse (5) ist, fixiert ist.

**6.** Lichtleiterklemmvorrichtung nach Anspruch 5, **dadurch gekennzeichnet, dass** die Hülse (10; 10') und der Stecker (3) miteinander stoffschlüssig, kraftschlüssig oder mittels eines Klebstoffs verbunden sind.
